# EUROPEAN PATENT SPECIFICATION

(11) **EP 4 160 790 B1**
(45) Date of publication and mention of the grant of the patent: **01.04.2026**
(21) Application number: 22197808.3
(22) Date of filing: 26.09.2022
(51) Int. Cl.: H01M 10/658, H01M 50/204, H01M 50/22, H01M 50/224, H01M 50/24, H01M 50/249

(54) **BATTERY PACK**
BATTERIEPACK
BLOC-BATTERIE

(30) Priority: 30.09.2021 KR 20210129964
(43) Date of publication of application: 05.04.2023
(73) Proprietor: SK On Co., Ltd., Seoul 03161 (KR)
(72) Inventor: HAN, Jin Su, 34124 Daejeon (KR); KANG, Min Song, 34124 Daejeon (KR); PARK, Ju Yong, 34124 Daejeon (KR); CHO, Sei Hoon, 34124 Daejeon (KR); KIM, Ji Woong, Daejeon Daejeon (KR); PAK, Byeong Jun, 34124 Daejeon (KR)
(74) Representative: Prüfer & Partner mbB Patentanwälte · Rechtsanwälte

(56) References cited:
- KR-A- 20210 060 414
- US-A1- 2020 212 385
- US-A1- 2020 287 180
- US-A1- 2021 119 298

## Description

### BACKGROUND

### 1. FIELD

The present disclosure relates to a battery pack having improved safety.

### 2. DESCRIPTION OF RELATED ART

Unlike primary batteries, secondary batteries may be charged and discharged, and thus may be applied to devices within various fields such as digital cameras, mobile phones, notebook computers, hybrid vehicles, and electrical vehicles. Among secondary batteries, lithium secondary batteries having high energy density and a high discharge voltage have been actively manufactured. The lithium secondary batteries are manufactured as pouch-type battery cells having flexibility, prismatic battery cells having rigidity, or cylindrical can-type battery cells.

A plurality of battery cells are stacked on each other and are mounted in a pack case in units of cell stacks that are electrically connected to form a battery pack. Such a battery pack is installed and used in an electrical vehicle or the like. For example, document US 2021/119298 A1 discloses a protective plate, a battery unit assembly, a battery module group, and a vehicle. The protective plate is provided with a guide groove. The protective plate is configured to shield an explosion-proof valve of a battery cell. The guide groove is configured to be disposed corresponding to the explosion-proof valve, and is configured to guide a flow direction of a flame ejected from the explosion-proof valve. Further, document US 2020/212385 A1 discloses a battery pack including a box body and a plurality of battery modules disposed in the box body and arranged in a horizontal direction. The battery module can include a plurality of battery cells electrically connected to each other by a plurality of first bus bars, the battery cell can include a battery case and two electrode terminals. Moreover, document US 2020/287180 A1 discloses a battery module including at least one battery unit array structure, an upper cover, a lower cover and a fireproof component disposed vertically. Each battery unit array structure includes a plurality of battery units and a plurality of busbars electrically connected to the plurality of battery units. The battery unit array structure is disposed between the upper cover and the lower cover. Each battery unit of each battery unit array structure is provided with a vent facing towards the fireproof component. Finally, document KR 2021 0060414 A discloses a lower protection plate for a battery module for an electric vehicle, which includes: a fiber-reinforced plastic composite material formed of a laminated sheet including at least one of a first sheet and a second sheet, wherein the first sheet includes a matrix resin and reinforcing fibers in a form of long fibers, and the second sheet includes a matrix resin and reinforcing fibers in a form of woven fabric woven from continuous fibers.

However, in such a related art battery pack, if one cell stack ignites, heat or flames may be easily transferred to another cell stack adjacent thereto, and thus secondary ignition or an explosion may occur. Therefore, there is demand for a battery pack capable of preventing secondary ignition or explosions.

### SUMMARY

Exemplary embodiments provide a battery pack in which an occurrence of secondary ignition or explosion due to a flames or high-temperature gas occurring therein is suppressed.

According to an aspect of the present disclosure, a battery pack may include: a pack case; and a plurality of cell stacks accommodated in an accommodation space of the pack case, wherein the pack case includes a lower plate on which the plurality of cell stacks are seated and a partition member partitioning the accommodation space, and at least a portion of the partition member may be formed of a material different from a material of the lower plate.

The partition member includes a support frame coupled to the lower plate and a blocking frame coupled to the support frame and disposed to face the cell stack.

The support frame may be formed of the same material as the material of the lower plate, and the blocking frame may be formed of a material having a melting point higher than that of the material of the lower plate.

The blocking frame may be formed of a material that does not melt at a temperature less than 700°C.

The blocking frame may include a metal or an inorganic binder.

The support frame may be formed of a material including aluminum, and the blocking frame may be formed of a material including at least one of steel and mica.

The blocking frame includes a lower frame coupled to the support frame; an upper frame spaced apart from the lower frame by a predetermined distance and disposed to be parallel to the lower frame; and an intermediate frame connecting the upper frame to the lower frame.

The cell stack may include a terminal to which a busbar is fastened, and the terminal may be disposed to face the intermediate frame.

The intermediate frame may have one side connected to a center of the upper frame and the other side connected to a center of the lower frame.

The intermediate frame may have one side connected to one side of the upper frame and the other side connected to one side or the other side of the lower frame.

The intermediate frame may include a first intermediate frame connecting one side of the upper frame to one side of the lower frame and a second intermediate frame connecting the other side of the upper frame to the other side of the lower frame.

The support frame may include a bonding portion bonded to the lower plate; an expansion portion spaced apart from the bonding portion by a predetermined distance; and a coupling portion connecting the bonding portion to the expansion portion, and the blocking frame may be provided in a plate form and may be stacked on both surfaces of the coupling portion.

At least a portion of the blocking frame may be embedded in the support frame.

The battery pack may include two venting flow paths spatially separated by the single partition member.

According to another aspect of the present disclosure, a battery pack includes; a pack case; and a plurality of cell stacks accommodated in an accommodation space of the pack case, wherein the pack case includes a lower plate on which the plurality of cell stacks are seated; and a partition member partitioning the accommodation space into a plurality of spaces, wherein a portion of the partition member facing the cell stack may be formed of a material that does not melt at a temperature less than 700°C.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a battery pack according to an exemplary embodiment in the present disclosure;
FIG. 2 is a partially exploded perspective view of FIG. 1;
FIG. 3 is an enlarged perspective view of a partition member illustrated in FIG. 2;
FIG. 4 is an exploded perspective view of the partition member illustrated in FIG. 3;
FIG. 5 is a cross-sectional view taken along line I-I' of FIG. 1;
FIGS. 6 to 8 are cross-sectional views of a battery pack according to another exemplary embodiment in the present disclosure, respectively;
FIG. 9 is a cross-sectional view of a battery pack according to another exemplary embodiment in the present disclosure; and
FIG.10 is an exploded perspective view of a partition member illustrated in FIG. 9.

### DETAILED DESCRIPTION

Prior to the description of the present disclosure, terms and words used in the present specification and claims to be described below should not be construed as limited to ordinary or dictionary terms, and should be construed in accordance with the technical idea of the present disclosure based on the principle that the inventors may properly define their own inventions in terms of terms in order to best explain the invention.

Hereinafter, preferred exemplary embodiments of the present disclosure will be described in detail with reference to the accompanying drawings. In this case, in the drawings, the same components are denoted by the same reference symbols as possible. Further, the detailed description of well-known functions and constructions which may obscure the gist of the present disclosure will be omitted. For the same reason, some of the elements in the accompanying drawings are exaggerated, omitted, or schematically illustrated, and the size of each element does not entirely reflect the actual size.

In addition, in the present specification, the expressions such as an upper side, a lower side, a side face, and the like, are described based on the drawings and may be expressed differently when the direction of the corresponding object is changed.

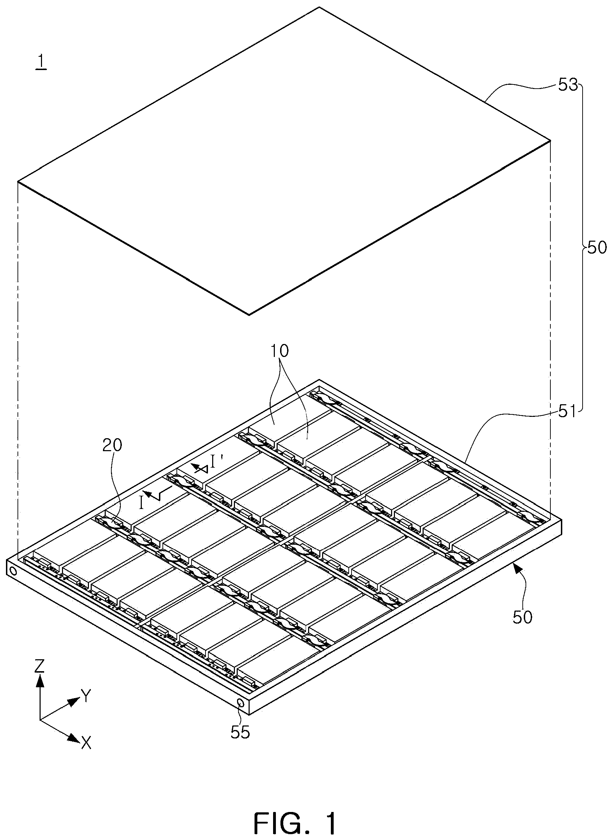

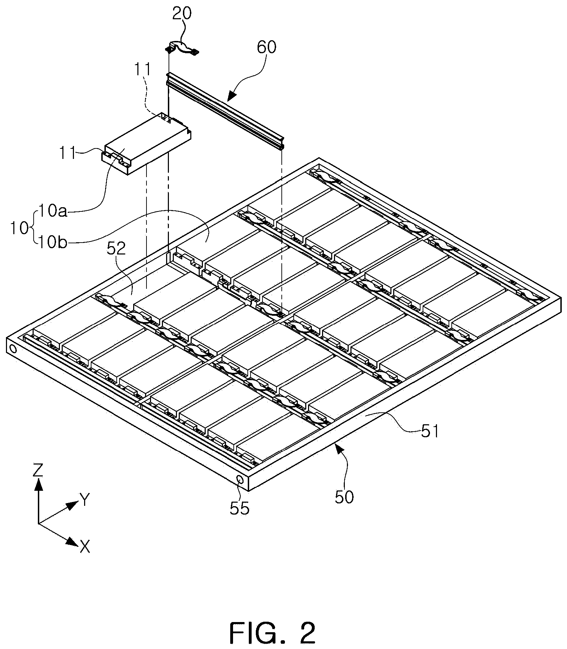

FIG. 1 is a perspective view schematically illustrating a battery pack according to an exemplary embodiment in the present disclosure, and FIG. 2 is a partially exploded perspective view of FIG. 1. For convenience of description, in FIG. 2, an upper plate is omitted.

Referring to FIGS. 1 and 2, a battery pack 1 according to an exemplary embodiment in the present disclosure may include a plurality of cell stacks 10 and a pack case 50.

The cell stack 10 may include a secondary battery such as a lithium battery or a nickel-hydrogen battery capable of charging and discharging. Each cell stack 10 may include a plurality of battery cells stacked therein to have a hexahedral shape and may be accommodated in a case or a stacked state thereof may be fixed by a bracket or the like.

At least one terminal 11 may be provided on one side of the cell stack 10. The terminal 11 may be a conductive member disposed to be exposed to the outside of the cell stack 10 to electrically connect the battery cells to the outside.

In the present exemplary embodiment, the terminal 11 may be disposed on at least one of both ends of the cell stack 10 in a length direction. Also, an upper surface of the terminal 11 may be exposed to the outside of the cell stack 10.

The terminal 11 may include a positive terminal and a negative terminal. Both the positive terminal and the negative terminal may be disposed at one end of the cell stack 10 or may be distributed to be disposed at both ends of the cell stack 10.

A busbar 20 may be fastened to the terminal 11.

The busbar 20 may connect the terminals 11 of any one cell stack 10a (hereinafter, referred to as a first cell stack) and another adjacent cell stack 10b (hereinafter, referred to as the second cell stack) to each other. For example, the busbar 20 may contact the terminal 11 of the first cell stack 10a and the terminal 11 of the neighboring second cell stack 10b to connect the terminals 11 to each other electrically and physically

The busbar 20 may include a busbar or a cable. Both ends of the busbar 20 may be respectively fastened to the terminals 11 of different cell stacks 10 through a fastening member such as a bolt.

The cell stacks 10 of the present exemplary embodiment may be connected to each other in series or in parallel through the busbar 20. In addition, if necessary, some of the cell stacks 10 may be connected in series, and some thereof may also be connected in parallel.

The busbar 20 according to the present exemplary embodiment may be formed by machining a flat rod-shaped conductive member. In addition, the busbar 20 may be formed of a material having flexibility. However, a configuration of the present disclosure is not limited thereto.

The pack case 50 may provide an accommodation space for accommodating other components therein. Accordingly, the pack case 50 may be provided in a form surrounding the entirety of the cell stacks 10, and the plurality of cell stacks 10 form a plurality of rows in the accommodation space of the pack case 50 and may be arranged side by side.

The pack case 50 may be formed of a metal material to ensure rigidity, but is not limited thereto. For example, in order to increase a heat dissipation effect, at least a portion of the pack case 50 may be formed of aluminum.

The pack case 50 may include a sidewall portion 51 forming an internal space, a lower plate 52 covering a lower portion of the internal space, and a partition member 60 disposed in the internal space. In addition, the pack case 50 may further include an upper plate 53 covering an upper portion of the internal space.

The sidewall portion 51 may form an outer surface of the pack case 50 and define an internal space. Accordingly, the cell stacks 10 may be accommodated in an internal space defined by the sidewall portion 51 and seated on the lower plate 52.

The partition member 60 may be disposed to cross the internal space formed by the sidewall portion 51 to divide the internal space into a plurality of accommodation spaces. Accordingly, at least a portion of the partition member 60 may be fastened to the sidewall portion 51.

The partition member 60 may reinforce overall rigidity of the pack case 50. The partition member 60 may be disposed between the cell stacks 10 to suppress propagation of gas or flames between the cell stacks 10.

Specifically, the partition member 60 may be disposed to cross between two cell stacks 10 disposed to face each other.

Accordingly, the cell stacks 10 may be distributed to be disposed in a plurality of accommodation spaces partitioned by the sidewall portion 51 and the partition member 60. In this case, the cell stacks 100 may be disposed so that one surface on which the terminal 11 is disposed faces the partition member 60, to be coupled to the pack case 50.

In addition, at least a portion of the partition member of the present exemplary embodiment may be formed of a material different from that of the lower plate 52. This is described in detail as follows.

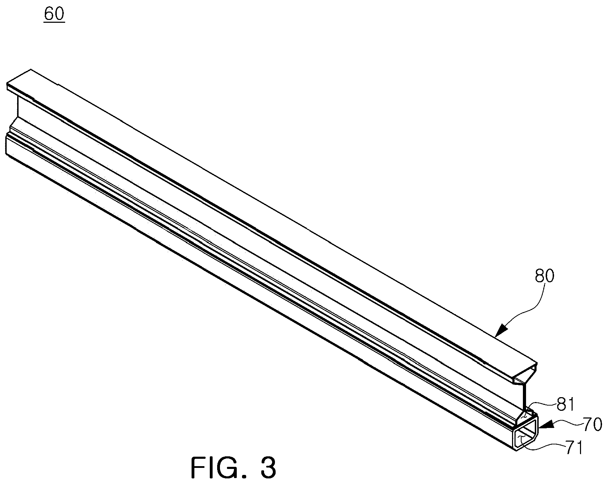

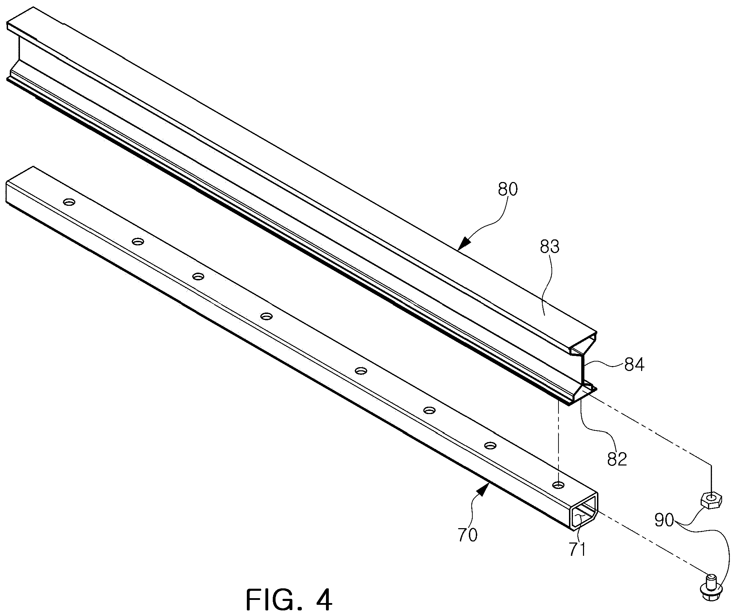

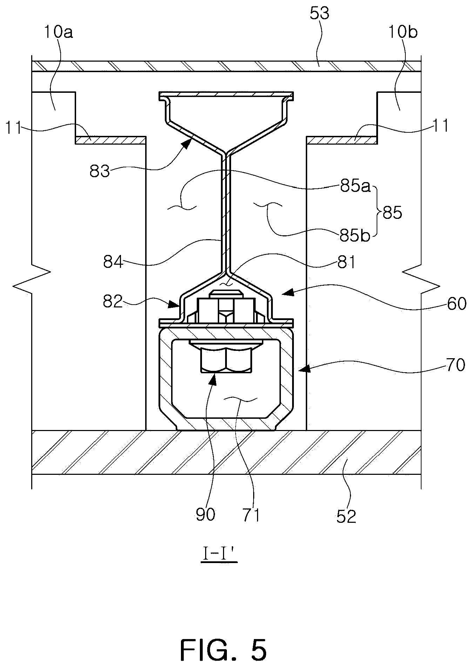

FIG. 3 is an enlarged perspective view of the partition member illustrated in FIG. 2, FIG. 4 is an exploded perspective view of the partition member illustrated in FIG. 3, and FIG. 5 is a cross-sectional view taken along line I-I' of FIG. 1.

Referring to FIGS. 3 to 5, the partition member 60 may include a support frame 70 coupled to the lower plate 52 of the pack case 50 and a blocking frame 80 coupled to the support frame 70.

The support frame 70 is a member interconnecting the lower plate 52 to the blocking frame 80, and one side of the support frame 70 may be fixedly coupled to the lower plate 52, and the other side thereof may be coupled to the blocking frame 80.

A cooling device (not illustrated) may be provided on an outer surface of the lower plate 52 of the present exemplary embodiment. Since the cell stack 10 is seated on the lower plate 52, heat generated by the cell stack 10 may be directly transferred to the lower plate 52 of the pack case 50, and heat transferred to the lower plate 52 may be discharged externally through the cooling device coupled to the outer surface of the lower plate 52. Here, the cooling device may be an air cooling device or a water cooling device for dissipating heat. Also, the lower plate 52 may be configured as part of a cooling device.

In this configuration, since it is difficult to form a hole in the lower plate 52, it may be difficult to couple the support frame 70 to the lower plate 52 using a fastening member such as a bolt. Therefore, in the present exemplary embodiment, the support frame 70 may be fastened to the lower plate 52 by welding or the like without using a fastening member. However, when the support frame 70 and the lower plate 52 are formed of different materials so dissimilar metal bonding needs to be performed, the difficulty of the process may increase and it may be difficult to secure reliable bonding force.

Therefore, in the present exemplary embodiment, the support frame 70 may be formed of the same material as a material of the lower plate 52. In the present exemplary embodiment, the lower plate 52 may be formed of a material including aluminum having high thermal conductivity to dissipate heat generated by the battery cells externally. Accordingly, the support frame 70 of the present exemplary embodiment may also be formed of a material including aluminum the same as the material of the lower plate 52.

In the present exemplary embodiment, a rectangular tubular member may be used as the support frame 70. However, the configuration of the present disclosure is not limited thereto and the support frame 70 may be variously modified as long as it may be firmly fixed to the lower plate 52 and the blocking frame 80. However, in consideration of an energy density of the battery pack 1, a width of the support frame 70 may be the same as or similar to a width of the blocking frame 80.

The blocking frame 80 may be disposed on the support frame 70, and at least one surface thereof may be disposed to face the cell stacks 10. For example, the blocking frame 80 may be disposed to face one surface of the cell stack 10 on which the terminal 11 is disposed.

In general, when a battery cell ignites or explodes inside the cell stack 10, explosive by-products such as high-temperature gas or flames and metal particles occurring in the cell stack 10 are ejected to the outside of the cell stack 10 from the periphery of the terminal 11 of the cell stack 10.

Accordingly, in the partition member 60 of the present exemplary embodiment, the blocking frame 80 is disposed in a portion facing the cell stack 10. Specifically, the blocking frame 80 may be disposed to face the terminals 11 of the cell stack 10, and the explosion by-products discharged from the cell stack 10 may first contact the blocking frame 80.

To this end, the blocking frame 80 of the present exemplary embodiment is formed of a material that is not easily melted when coming into contact with explosion by-products.

The blocking frame 80 of the present exemplary embodiment is formed of a material having a melting point higher than that of the support frame 70 or the lower plate 52. Specifically, the blocking frame 80 may be formed of a high fire resistance material that is melted at a temperature of 700°C or higher, and to this end, the blocking frame 80 may include a metal such as steel or an inorganic binder such as aerogel or synthetic mica. However, the present disclosure is not limited thereto, and a material, which has a rigidity similar to that of a metal and does not melt at a temperature less than 700°C, may be variously used. In addition, the blocking frame 80 may be manufactured through post-processing such as coating, a heat-treatment, or the like, to reinforce heat resistance, fire resistance, strength and rigidity.

The blocking frame 80 of the present exemplary embodiment may include a lower frame 82 in surface-contact with an upper surface of the support frame 70 and coupled to the support frame 70, an upper frame 83 spaced apart from the lower frame 82 by a predetermined distance and disposed to be parallel to the lower frame 82, and an intermediate frame 84 having a plate shape connecting the upper frame 83 to the lower frame 82.

In the present exemplary embodiment, one side of the intermediate frame 84 may be connected to the center of the upper frame 83 and the other side thereof may be connected to the center of the lower frame 82. Accordingly, the blocking frame 80 of the present exemplary embodiment may be formed to have a 'I' shape in a vertical cross section, and due to this structure, the terminal 11 of the cell stack 10 may be disposed to face a center frame of the blocking frame 80.

The cell stack 10 is spaced apart from the blocking frame 80 by a predetermined distance. Accordingly, an empty space having a predetermined size is formed between the upper frame 83 and the lower frame 82, that is, between the cell stack 10 and the intermediate frame 84. In the present exemplary embodiment, the empty space may be used as a venting flow path. 85.

When explosion byproducts such as gas are discharged from the cell stack 10 due to ignition of the battery cells, etc., the venting flow path 85 may be used as a passage through which the explosion byproducts move to the outside from the battery pack 1. Therefore, the explosion byproducts may move to the sidewall portion 51 of the pack case 50 through the venting flow path 85 and are then discharged to the outside of the pack case 50 through a venting hole 55 provided in the sidewall portion 51.

In the present exemplary embodiment, the venting flow path 85 may include a first venting flow path 85a disposed to face the first cell stack 10a and a second venting flow path 85b disposed to face the second cell stack 10b. As illustrated in FIG. 5, in the present exemplary embodiment, the first venting flow path 85a and the second venting flow path 85b may be divided by an intermediate frame 84, and may be horizontally symmetrical with respect to the intermediate frame 84. That is, the venting flow path 85 of the present exemplary embodiment may include two venting flow paths 85a and 85b that are spatially separated by one partition member 60.

Through this configuration, the first venting flow path 85a may be used as a passage for discharging explosion by-products of the first cell stack 10a, and the second venting flow path 85b may be used as a passage for discharging by-products of the second cell stack 10b. Therefore, even if flames or thermal runaway occurs in the cell stack disposed on one side of the intermediate frame 84, an influence thereof on a cell stack on the other side may be minimized. However, the present disclosure is not limited to the above configuration and may be modified in various forms as in the exemplary embodiments to be described later.

Meanwhile, the pack case 50 may be provided with a passage through which the explosion byproducts may move to the venting hole 55. The passage may be formed through an internal space of the sidewall portion 51 or may be formed as a space between the sidewall portion 51 and the cell stack 10. Therefore, the explosion byproducts introduced into the venting flow path 85 may be discharged to the outside through the venting hole 55 after being introduced into the passage described above. Accordingly, rapid propagation of flames/heat and secondary damage may be minimized.

The blocking frame 80 may be fastened to the support frame 70 through a fastening member 90 such as a bolt or a nut. For example, the fastening member 90 may partially pass through the support frame 70 and the blocking frame 80 and be fastened to integrally fix the blocking frame 80 and the support frame 70. A plurality of fastening members 90 may be provided to be fastened to the partition member 60 in a length direction of the partition member 60.

Accordingly, even if the blocking frame 80 and the support frame 70 are formed of different materials, the blocking frame 80 and the support frame 70 may be easily coupled to each other. However, the configuration of the present disclosure is not limited thereto, and the blocking frame 80 and the support frame 70 may be mutually bonded using an adhesive, or the blocking frame 80 may be coupled to the support frame 70 by a sliding coupling method. That is, various coupling methods may be used as long as the blocking frame 80 may be firmly coupled to the support frame 70.

When the blocking frame 80 and the support frame 70 are fastened with the fastening member 90, a fastening space 81 in which the fastening member 90 is partially disposed may be provided at the lower frame 82 of the blocking frame 80. To this end, the lower frame 82 of the blocking frame 80 of the present exemplary embodiment may be formed in a pipe shape. Similarly, a fastening space 71 may be provided in the support frame 70. However, the configuration of the present disclosure is not limited thereto.

In the battery pack 1 of the present exemplary embodiment configured as described above, the partition member 60 is formed of a material having a melting point higher than that of the upper plate 53 or the lower plate 52 of the pack case 50. Therefore, the partition member 60 may not be easily melted even when coming contact with the explosive by-products, thus minimizing the breakage of the partition member 60 by the explosive by-products, thereby suppressing the occurrence of secondary ignition or explosions due to the diffusion of flames or high-temperature gas.

Meanwhile, a configuration in which the entire pack case 50 is formed of the same material as that of the blocking frame 80 may be considered, but in this case, a weight of the battery pack 1 may be increased and a heat dissipation effect may be reduced.

Meanwhile, in the battery pack 1 of the present exemplary embodiment, since the lower plate 52 may be formed of an aluminum material, the weight may be minimized in addition to the aforementioned effect, and at the same time, high heat dissipation performance may be provided.

Meanwhile, the present disclosure is not limited to the exemplary embodiment described above and various modifications may be made.

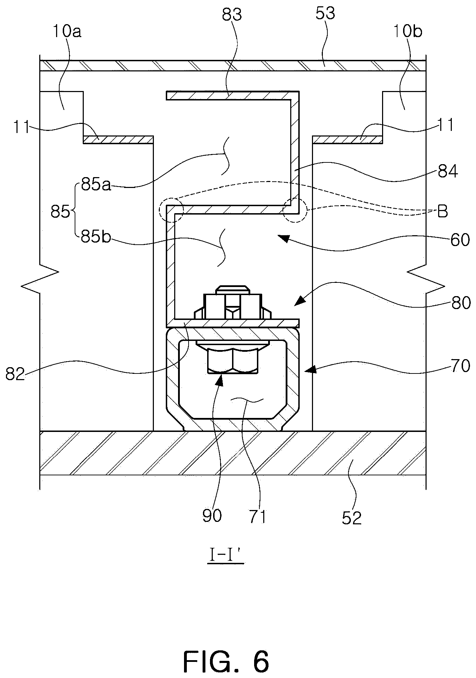

FIGS. 6 to 8 are cross-sectional views of a battery pack according to another exemplary embodiment in the present disclosure, respectively, illustrating a cross-section corresponding to FIG. 5 and illustrating an example in which a shape of the blocking frame 80 is modified.

Referring to FIG. 6 first, the blocking frame 80 of the present exemplary embodiment may have a zigzag cross-section. Specifically, one side of the intermediate frame 84 may be connected to one side of the upper frame 83, and the other side thereof may be connected to the other side of the lower frame 82. In addition, the intermediate frame 84 may include at least one bent portion B.

In the present exemplary embodiment, the intermediate frame 84 may have two bent portions B, and the intermediate frame 84 may be bent by 90° at each of the bent portions B. Accordingly, the blocking frame 80 of the present exemplary embodiment may be formed in a ' 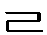 ' shape in its entire cross-section.

In this case, the two venting flow paths 85a and 85b may be stacked in a vertical direction. Specifically, the first venting flow path 85a disposed to face the first cell stack 10a may be disposed above or below the second venting flow path 85b disposed to face the second cell stack 10b.

Meanwhile, in the present exemplary embodiment, a case in which the bent portion B is formed in the intermediate frame 84 is taken as an example, but the configuration of the present disclosure is not limited thereto, and the bent portion B may be omitted and the intermediate frame 84 may be formed in the form of a flat. In this case, the blocking frame 80 may be formed in a 'Z' shape in the entire cross section thereof.

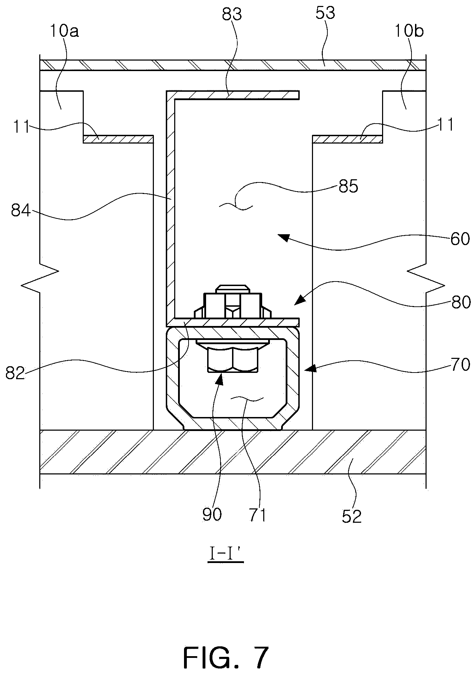

Referring to FIG. 7, in the blocking frame 80 of the present exemplary embodiment, both sides of the intermediate frame 84 may be connected to one side of the upper frame 83 and one side of the lower frame 82, respectively. Accordingly, the blocking frame 80 of the present exemplary embodiment may be formed in a 'C' shape in the entire cross section thereof.

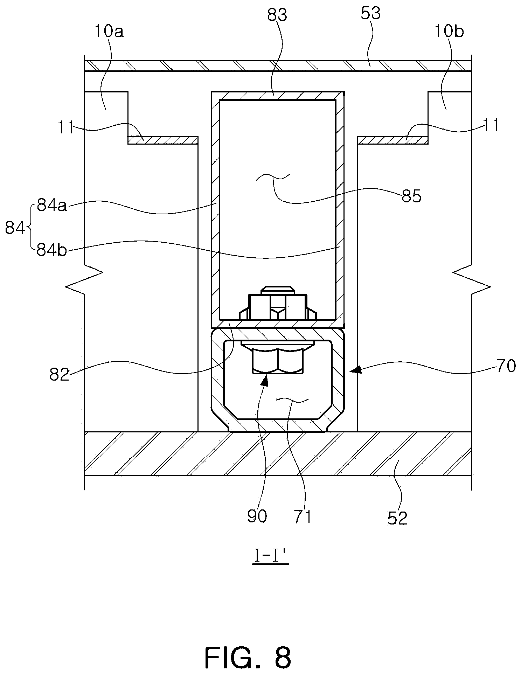

Also, referring to FIG. 8, in the blocking frame 80 of the present exemplary embodiment, two intermediate frames 84a and 84b may be spaced apart from each other. The intermediate frame 84 of the present exemplary embodiment may include a first intermediate frame 84a connecting one side of the upper frame 83 to one side of the lower frame 82 and a second intermediate frame 84b connecting the other side of the upper frame 83 to the other side of the lower frame 82. Accordingly, the blocking frame 80 of the present exemplary embodiment may be formed in a ' 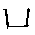 ' shape in the entire cross section thereof.

In this case, an internal space of the blocking frame 80 may be used as the venting flow path 85. Also, although not illustrated, the first intermediate frame 84a or the second intermediate frame 84b may be provided with an opening through which explosion by-products may be introduced into the venting flow path 85.

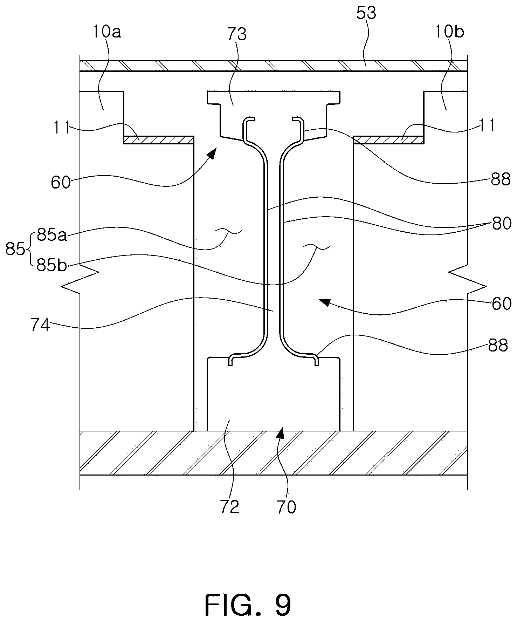

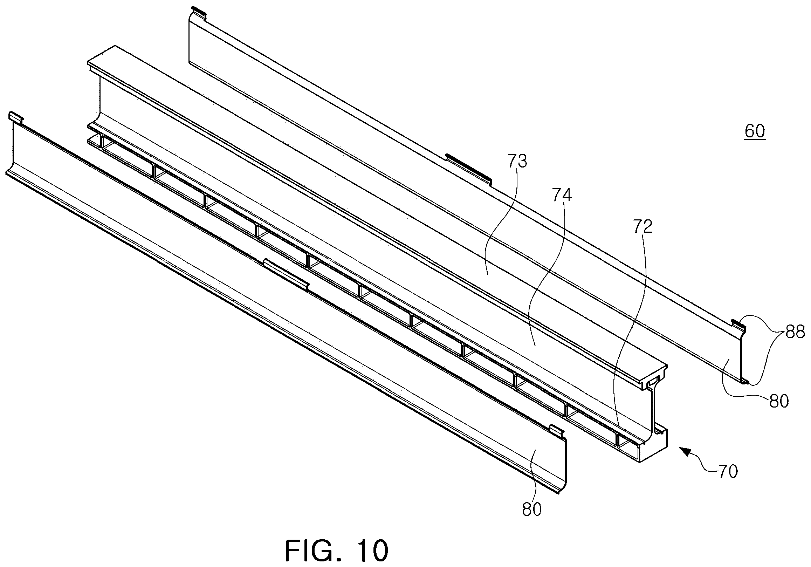

FIG. 9 is a cross-sectional view of a battery pack according to another exemplary embodiment in the present disclosure, illustrating a cross-section corresponding to FIG. 5. Also, FIG. 10 is an exploded perspective view of a partition member illustrated in FIG. 9.

Referring to FIGS. 9 and 10, in the partition member 60 of the present exemplary embodiment, the support frame 70 constitutes an overall skeleton of the partition member 60, and the blocking frame 80 may be coupled to a side surface of the support frame 70.

One side of the support frame 70 of the present exemplary embodiment may be fixedly fastened to the lower plate 52, and the other side thereof may be disposed to face the upper plate 53. As in the exemplary embodiment described above, the support frame 70 may be fastened to the lower plate 52 by welding or the like. Accordingly, the support frame 70 may be formed of the same material as that of the lower plate 52.

More specifically, the support frame 70 of the present exemplary embodiment may include a bonding portion 72 bonded to the lower plate 52 and a coupling portion 74 to which the blocking frame 80 is coupled.

One surface of the bonding portion 72 may be bonded to the lower plate 52, and thus the bonding portion 72 may be configured similarly to the support frame 70 of FIG. 5 described above. However, the present disclosure is not limited thereto, and the bonding portion 72 may be modified to have various shapes as long as it is firmly fixed to the lower plate 52.

The coupling portion 74 may be formed to extend from an upper surface of the bonding portion 72 toward the upper plate 53. In the present exemplary embodiment, the coupling portion 74 may be formed in the form of a plate in which both surfaces are flat. However, the present disclosure is not limited thereto, and the coupling portion 74 may be configured to have a curvature if necessary. Here, both surfaces of the coupling portion 74 refer to surfaces disposed to face the cell stack 10.

In addition, the support frame 70 may include an expansion portion 73 disposed above the coupling portion 74. Therefore, the coupling portion 74 may be disposed to connect the expansion portion 73 to the bonding portion 72.

The expansion portion 73 may be disposed to be spaced apart from the bonding portion 72 by a predetermined distance, and may be formed to expand a thickness of the coupling portion 74. In addition, a width of the expansion portion 73 may be formed to have a width similar to or equal to that of the bonding portion 72.

In the present exemplary embodiment, the coupling portion 74 connects the center of the expansion portion 73 to the center of the bonding portion 72. Accordingly, the support frame 70 of the present exemplary embodiment may be formed in a shape similar to that of the blocking frame 80 illustrated in FIG. 5. For example, the expansion portion 73 may be configured to be similar to the upper frame 83 of the blocking frame 80 illustrated in FIG. 5, the coupling portion 74 may be configured to be similar to the intermediate frame 84, and the bonding portion 72 may be configured to be similar to the lower frame 82 and the support frame 70 illustrated in FIG. 5.

Therefore, an empty space may be formed between the expansion portion 73 and the bonding portion 72, and this empty space may be used as the venting flow path 85.

However, the configuration of the present disclosure is not limited thereto, and as in the exemplary embodiments of the blocking frame described above, the coupling portion 74 may be connected to the expansion portion 73 and the bonding portion 72 in various forms.

The blocking frame 80 of the present exemplary embodiment may be provided in the form of a plate and may be stacked on the coupling portion 74. Therefore, the blocking frame 80 may be formed in the form of a plate corresponding to both surfaces of the coupling portion 74.

The cell stack 10 of the present exemplary embodiment may be disposed such that the terminal 11 faces the blocking frame 80. To this end, the blocking frame 80 may be disposed on both entire surfaces of the coupling portion 74. However, the configuration of the present disclosure is not limited thereto, and if necessary, the blocking frame 80 may be configured so that the coupling portion 74 is partially exposed.

The blocking frame 80 and the support frame 70 may be formed of the same material as that of the exemplary embodiment described above. For example, the blocking frame 80 may be formed of a material having a melting point higher than that of the support frame 70 or the lower plate 52.

The partition member 60 of the present exemplary embodiment configured as described above may be manufactured by an insert injection method. For example, the blocking frame 80 may be first prepared and placed in a mold, and then the support frame 70 may be formed by a die-casting method to integrally manufacture the blocking frame 80 and the support frame 70.

In this case, at least a portion of the blocking frame 80 may be embedded in the support frame 70. Specifically, the blocking frame 80 may include an embedded portion 88 embedded in the support frame 70. In the present exemplary embodiment, the embedding portion 88 may be embedded in each of the bonding portion 72 and the expansion portion 73 of the support frame 70, but the present disclosure is not limited thereto and the embedded portion 88 may be configured to be embedded in the coupling portion 74 as necessary.

Meanwhile, the partition member 60 of the present exemplary embodiment is not limited to the aforementioned configuration and may be manufactured in various manners. That is various modifications may be made, for example, the blocking frame 80 and the support frame 70 may be separately manufactured and then coupled to each other using an adhesive or a fastening member, or the blocking frame 80 may be coupled to the support frame 70 by a fitting method or a sliding coupling method.

As set forth above, according to an exemplary embodiment in the present disclosure, the partition member of the battery pack is formed of a material having a melting point higher than that of the upper plate or lower plate of the pack case. Therefore, the partition member may not be easily melted even when coming into contact with explosion by-products, thereby minimizing damage to the pack case by the explosion by-products, and thereby suppressing the occurrence of secondary ignition or explosions due to the diffusion of flames or high-temperature gas.

One of the various effects of the present disclosure is uniformly forming the Ni plating layer and a thin, uniform plating layer including Pd on the Ni plating layer by flattening a surface on which the Ni plating layer is to be formed and imparting conductivity by disposing the Sn plating layer on the electrode.

One of the various effects of the present disclosure is preventing corrosion or deposition of the external electrodes and improving reliability.

One of the various effects of the present disclosure is providing the multilayer electronic component suitable for mounting on a substrate using a conductive resin adhesive.

While example exemplary embodiments have been illustrated and described above, it will be apparent to those skilled in the art that modifications and variations could be made without departing from the scope of the present disclosure as defined by the appended claims.

## Claims

1. A battery pack comprising:
a pack case (50); and
a plurality of cell stacks (10, 100) accommodated in an accommodation space of the pack case (50),
wherein the pack case (50) includes a lower plate (52) on which the plurality of cell stacks (10, 100) are seated and a partition member (60) partitioning the accommodation space, and at least a portion (51, 88) of the partition member (60) is formed of a material different from a material of the lower plate (52), wherein the partition member (60) includes a support frame (70) coupled to the lower plate (52) and a blocking frame (80) coupled to the support frame (70) and disposed to face the cell stack (10, 10a, 10b, 100), wherein
the blocking frame (80) includes:
a lower frame (82) coupled to the support frame (70);
an upper frame (83) spaced apart from the lower frame (82) by a predetermined distance and disposed to be parallel to the lower frame (82); and
an intermediate frame (84, 84a, 84b) connecting the upper frame (83) to the lower frame (82).

2. The battery pack of claim 1, wherein the support frame (70) is formed of the same material as the material of the lower plate (52), and the blocking frame (80) is formed of a material having a melting point higher than that of the material of the lower plate (52).

3. The battery pack of claim 1 or 2, wherein the blocking frame (80) is formed of a material that does not melt at a temperature less than 700°C.

4. The battery pack of anyone of claims 1 to 3,
wherein the blocking frame (80) includes a metal or an inorganic binder.

5. The battery pack of anyone of claims 1 to 4,
wherein the support frame (70) is formed of a material including aluminum, and the blocking frame (80) is formed of a material including at least one of steel and mica.

6. The battery pack of any one of claims 1 to 5,
wherein the cell stack (10, 10a, 10b, 100) includes a terminal (11) to which a busbar (20) is fastened, and the terminal (11) is disposed to face the intermediate frame (84, 84a, 84b).

7. The battery pack of claim 1 to 6, wherein the intermediate frame (84, 84a, 84b) has one side connected to a center of the upper frame (83) and the other side connected to a center of the lower frame.

8. The battery pack of claim 1 to 6, wherein the intermediate frame (84, 84a, 84b) has one side connected to one side of the upper frame (83) and the other side connected to one side or the other side of the lower frame.

9. The battery pack of anyone of claims 1 to 8,
wherein the intermediate frame (84, 84a, 84b) includes a first intermediate frame (84a) connecting one side of the upper frame (83) to one side of the lower frame and a second intermediate frame (84b) connecting the other side of the upper frame (83) to the other side of the lower frame.

10. The battery pack of anyone of claims 1 to 9,
wherein
the support frame (70) includes:
a bonding portion (72) bonded to the lower plate (52);
an expansion portion (73) spaced apart from the bonding portion (72) by a predetermined distance; and
a coupling portion (74) connecting the bonding portion (72) to the expansion portion (73),
wherein the blocking frame (80) is provided in a plate form and is stacked on both surfaces of the coupling portion (74).

11. The battery pack of anyone of claims 1 to 10,
wherein at least a portion (51, 88) of the blocking frame (80) is embedded in the support frame (70).

12. The battery pack of anyone of the preceding claims, further comprising two venting flow paths spatially separated by the single partition member.

13. The battery pack of anyone of the preceding claims, wherein a portion (51, 88) of the partition member (60) facing the cell stack (10, 10a, 10b, 100) is formed of a material that does not melt at a temperature less than 700°C.

## Patentansprüche

1. Batteriepack, umfassend:
ein Packgehäuse (50); und
eine Vielzahl von Zellstapeln (10, 100), die in einem Aufnahmeraum des Packgehäuses (50) untergebracht sind,
wobei das Packgehäuse (50) eine untere Platte (52), auf der die Vielzahl von Zellstapeln (10, 100) angeordnet sind, und ein Trennelement (60), das den Aufnahmeraum unterteilt, beinhaltet, und mindestens ein Abschnitt (51, 88) des Trennelements (60) aus einem Material gebildet ist, das sich von einem Material der unteren Platte (52) unterscheidet, wobei das Trennelement (60) einen Stützrahmen (70), der mit der unteren Platte (52) verbunden ist, und einen Blockierrahmen (80), der mit dem Stützrahmen (70) verbunden und so angeordnet ist, dass er dem Zellstapel (10, 10a, 10b, 100) zugewandt ist, beinhaltet, wobei
der Blockierrahmen (80) Folgendes beinhaltet:
einen unteren Rahmen (82), der mit dem Stützrahmen (70) verbunden ist;
einen oberen Rahmen (83), der von dem unteren Rahmen (82) um einen vorbestimmten Abstand beabstandet und so angeordnet ist, dass er parallel zu dem unteren Rahmen (82) ist; und
einen Zwischenrahmen (84, 84a, 84b), der den oberen Rahmen (83) mit dem unteren Rahmen (82) verbindet.

2. Batteriepack gemäß Anspruch 1, wobei der Stützrahmen (70) aus dem gleichen Material wie das Material der unteren Platte (52) gebildet ist, und der Blockierrahmen (80) aus einem Material gebildet ist, das einen Schmelzpunkt aufweist, der höher als der des Materials der unteren Platte (52) ist.

3. Batteriepack gemäß Anspruch 1 oder 2, wobei der Blockierrahmen (80) aus einem Material gebildet ist, das bei einer Temperatur von weniger als 700 °C nicht schmilzt.

4. Batteriepack gemäß einem der Ansprüche 1 bis 3, wobei der Blockierrahmen (80) ein Metall oder ein anorganisches Bindemittel beinhaltet.

5. Batteriepack gemäß einem der Ansprüche 1 bis 4, wobei der Stützrahmen (70) aus einem Material gebildet ist, das Aluminium beinhaltet, und der Blockierrahmen (80) aus einem Material gebildet ist, das mindestens eines von Stahl und Glimmer beinhaltet.

6. Batteriepack gemäß einem der Ansprüche 1 bis 5, wobei der Zellstapel (10, 10a, 10b, 100) einen Anschluss (11) beinhaltet, an dem eine Sammelschiene (20) befestigt ist, und der Anschluss (11) so angeordnet ist, dass er dem Zwischenrahmen (84, 84a, 84b) zugewandt ist.

7. Batteriepack gemäß Anspruch 1 bis 6, wobei der Zwischenrahmen (84, 84a, 84b) eine Seite aufweist, die mit einer Mitte des oberen Rahmens (83) verbunden ist, und die andere Seite mit einer Mitte des unteren Rahmens verbunden ist.

8. Batteriepack gemäß Anspruch 1 bis 6, wobei der Zwischenrahmen (84, 84a, 84b) eine Seite aufweist, die mit einer Seite des oberen Rahmens (83) verbunden ist, und die andere Seite mit einer Seite oder der anderen Seite des unteren Rahmens verbunden ist.

9. Batteriepack gemäß einem der Ansprüche 1 bis 8, wobei der Zwischenrahmen (84, 84a, 84b) einen ersten Zwischenrahmen (84a), der eine Seite des oberen Rahmens (83) mit einer Seite des unteren Rahmens verbindet, und einen zweiten Zwischenrahmen (84b), der die andere Seite des oberen Rahmens (83) mit der anderen Seite des unteren Rahmens verbindet, beinhaltet.

10. Batteriepack gemäß einem der Ansprüche 1 bis 9, wobei
der Stützrahmen (70) Folgendes beinhaltet:
einen Verbindungsabschnitt (72), der mit der unteren Platte (52) verbunden ist;
einen Erweiterungsabschnitt (73), der von dem Verbindungsabschnitt (72) um einen vorbestimmten Abstand beabstandet ist; und
einen Verbindungsabschnitt (74), der den Verbindungsabschnitt (72) mit dem Erweiterungsabschnitt (73) verbindet,
wobei der Blockierrahmen (80) in einer Plattenform bereitgestellt ist und auf beiden Oberflächen des Verbindungsabschnitts (74) gestapelt ist.

11. Batteriepack gemäß einem der Ansprüche 1 bis 10, wobei mindestens ein Abschnitt (51, 88) des Blockierrahmens (80) in den Stützrahmen (70) eingebettet ist.

12. Batteriepack gemäß einem der vorhergehenden Ansprüche, ferner umfassend zwei Entlüftungsströmungswege, die durch das einzelne Trennelement räumlich getrennt sind.

13. Batteriepack gemäß einem der vorhergehenden Ansprüche, wobei ein Abschnitt (51, 88) des Trennelements (60), der dem Zellstapel (10, 10a, 10b, 100) zugewandt ist, aus einem Material gebildet ist, das bei einer Temperatur von weniger als 700 °C nicht schmilzt.

## Revendications

1. Bloc-batterie comprenant :
un boîtier de bloc (50) ; et
une pluralité d'empilements de cellules (10, 100) logés dans un espace de logement du boîtier de bloc (50),
où le boîtier de bloc (50) comprend une plaque inférieure (52) sur laquelle la pluralité d'empilements de cellules (10, 100) sont placés et un élément de séparation (60) séparant l'espace de logement, et au moins une partie (51, 88) de l'élément de séparation (60) est formée d'un matériau différent d'un matériau de la plaque inférieure (52), où l'élément de séparation (60) comprend un cadre de support (70) couplé à la plaque inférieure (52) et un cadre de blocage (80) couplé au cadre de support (70) et disposé pour faire face à l'empilement de cellules (10, 10a, 10b, 100), où
le cadre de blocage (80) comprend :
un cadre inférieur (82) couplé au cadre de support (70) ;
un cadre supérieur (83) espacé du cadre inférieur (82) d'une distance prédéterminée et disposé pour être parallèle au cadre inférieur (82) ; et
un cadre intermédiaire (84, 84a, 84b) reliant le cadre supérieur (83) au cadre inférieur (82).

2. Bloc-batterie selon la revendication 1, où le cadre de support (70) est formé du même matériau que le matériau de la plaque inférieure (52), et le cadre de blocage (80) est formé d'un matériau ayant un point de fusion supérieur à celui du matériau de la plaque inférieure (52).

3. Bloc-batterie selon la revendication 1 ou 2, où le cadre de blocage (80) est formé d'un matériau qui ne fond pas à une température inférieure à 700°C.

4. Bloc-batterie selon l'une quelconque des revendications 1 à 3, où le cadre de blocage (80) comprend un métal ou un liant inorganique.

5. Bloc-batterie selon l'une quelconque des revendications 1 à 4, où le cadre de support (70) est formé d'un matériau comprenant de l'aluminium, et le cadre de blocage (80) est formé d'un matériau comprenant au moins l'un de l'acier et du mica.

6. Bloc-batterie selon l'une quelconque des revendications 1 à 5, où l'empilement de cellules (10, 10a, 10b, 100) comprend une borne (11) à laquelle une barre omnibus (20) est fixée, et la borne (11) est disposée pour faire face au cadre intermédiaire (84, 84a, 84b).

7. Bloc-batterie selon la revendication 1 à 6, où le cadre intermédiaire (84, 84a, 84b) a un côté relié à un centre du cadre supérieur (83) et l'autre côté relié à un centre du cadre inférieur.

8. Bloc-batterie selon la revendication 1 à 6, où le cadre intermédiaire (84, 84a, 84b) a un côté relié à un côté du cadre supérieur (83) et l'autre côté relié à un côté ou l'autre côté du cadre inférieur.

9. Bloc-batterie selon l'une quelconque des revendications 1 à 8, où le cadre intermédiaire (84, 84a, 84b) comprend un premier cadre intermédiaire (84a) reliant un côté du cadre supérieur (83) à un côté du cadre inférieur et un deuxième cadre intermédiaire (84b) reliant l'autre côté du cadre supérieur (83) à l'autre côté du cadre inférieur.

10. Bloc-batterie selon l'une quelconque des revendications 1 à 9, où
le cadre de support (70) comprend :
une partie de liaison (72) liée à la plaque inférieure (52) ;
une partie d'expansion (73) espacée de la partie de liaison (72) d'une distance prédéterminée ; et
une partie de couplage (74) reliant la partie de liaison (72) à la partie d'expansion (73),
où le cadre de blocage (80) est prévu sous forme de plaque et est empilé sur les deux surfaces de la partie de couplage (74).

11. Bloc-batterie selon l'une quelconque des revendications 1 à 10, où au moins une partie (51, 88) du cadre de blocage (80) est intégrée dans le cadre de support (70).

12. Bloc-batterie selon l'une quelconque des revendications précédentes, comprenant en outre deux trajets d'écoulement de ventilation séparés spatialement par l'élément de séparation unique.

13. Bloc-batterie selon l'une quelconque des revendications précédentes, où une partie (51, 88) de l'élément de séparation (60) faisant face à l'empilement de cellules (10, 10a, 10b, 100) est formée d'un matériau qui ne fond pas à une température inférieure à 700°C.
